# EUROPÄISCHE PATENTSCHRIFT

(11) **EP 2 141 010 B1**
(45) Veröffentlichungstag und Bekanntmachung des Hinweises auf die Patenterteilung: **15.05.2013**
(21) Anmeldenummer: 09009973.0
(22) Anmeldetag: 03.08.2007
(51) Int. Cl.: B32B 5/26, B29C 70/22, D04H 3/04

(54) **Kaskadenführung**
Cascade transport
Guidage en cascade

(30) Priorität: 04.08.2006 DE 102006036866; 05.09.2006 DE 102006042047; 05.12.2006 DE 102006057633; 05.12.2006 DE 102006057634; 05.12.2006 DE 102006057635; 05.12.2006 DE 102006057636; 14.02.2007 DE 102007007919
(43) Veröffentlichungstag der Anmeldung: 06.01.2010
(62) Teilanmeldung aus: 07785685.4
(73) Patentinhaber: Fibraforce AG, 5453 Remetschwil (CH)
(72) Erfinder: Scholten, Friedhelm, 47198 Duisburg (DE); Szukat, Klaus, 03792 Parcent (ES)
(74) Vertreter: Demski, Siegfried

(56) Entgegenhaltungen:
- DE-A1-102004 047 646
- DE-A1-102005 000 115
- US-A1- 2005 044 677

## Beschreibung

Die Erfindung betrifft ein Verfahren zur Herstellung eines multidirektionalen Geleges aus Fasern, insbesondere aus Kohlefasern, in welchem eine unidirektionale Gelegebahn unter einem Winkel um eine Platte zu einem Wickel gewickelt wird, wobei die Platte mit einer Vorrichtung zur Kompensation von Reibung versehen ist und der Wickel von der Platte abgezogen wird.

Langfaserverstärkte Faserverbundbauteile sind ein wichtiges Anwendungsgebiet für technische Textilien. Aufbau und Struktur des Verstärkungstextiles bestimmen im Zusammenspiel mit der Herstellungstechnologie sowie dem verwendeten Matrixmaterial maßgeblich die Eigenschaft des späteren Verbundbauteils. Multiaxiale Gelege, auch MD- oder multidirektionale Gelege genannt, spielen dabei eine besondere Rolle, denn sie erlauben im Vergleich zu anderen Textilien Flächenkonstruktionen, die eine höhere Ausnutzung der spezifischen Eigenschaften der verwendeten Fasern bei gleichzeitiger Reduzierung der Herstellungs- und damit Bauteilkosten bieten.

Zur Herstellung von multiaxialen Gelegen wird auf verschiedene Techniken zurückgegriffen. Eine naheliegende Technologie ist der Rückgriff auf ein webähnliches Verfahren, in dem ein Schussfaden unter einem Winkel zur Erstreckungsrichtung der Gelegebahn gelegt wird. Dieses Verfahren ist jedoch langsam und erlaubt bei den feinen Fasern eine nur geringe Herstellungsgeschwindigkeit. Wesentlich schneller zur Herstellung hat sich ein Verfahren herausgestellt, in welchem uniaxiale Gelege, auch UD oder unidirektionale Gelege genannt, durch Wickeln um eine Ebene zu einem multiaxialen Gelege umgeformt werden.

In der Offenlegungsschrift DE 10 2005 000 115 A1 wird ein Verfahren zur Herstellung einer multidirektionalen Gelegebahn offenbart, wobei in diesem Verfahren um ein Gelege, dessen Fasern in Erstreckungsrichtung der Gelegebahn ausgerichtet sind, zwei weitere Bahnen mit einem Winkel zur Erstreckungsrichtung gewickelt werden, wobei ein multiaxiales Gelege entsteht. Dieses multiaxiale Gelege weist somit mindestens drei Schichten auf. Diese sind die beiden gegenüber liegenden Schichten des unter einem Winkel gewickelten Geleges und die sogenannte Null-Grad-Bahn, welche Fasern in Erstreckungsrichtung der Gelegebahn aufweist. Ein derartiges Gelege weist positive Eigenschaften in Bezug auf Zugfestigkeit auf.

Die japanische Patentanmeldung JP 2003 221771A betrifft ein Verfahren zur Herstellung einer multiaxialen Gelegebahn offenbart, in welchem ausschließlich die unter einem Winkel gewickelten Gelegebahnen um zwei etwa handbreite Bänder gewickelt werden, die in dem Gelege verbleiben. Durch dieses Verfahren entsteht ein multiaxiales Gelege, welches verstärkte Ränder aufweist. Die verstärkten Ränder haben einerseits den Vorteil, dass hierdurch das Gelege gerade an den Rändern eine hohe Zähigkeit oder eine hohe Stabilität aufweist, auf der anderen Seite hat dieses Gelege den Nachteil, dass durch die an den Rändern erhöhe Stärke des Materials das Material nicht stabil auf eine Rolle gewickelt werden kann und andererseits ist es hierdurch nicht möglich, gleichmäßige Schichtdicken eines faserverstärkten Kunststoffes aufzubauen, da die seitlichen Bänder das Gelege unnötig in seiner Stärke erhöhen.

Zur Herstellung von faserverstärkten Kunststoffen werden Gelege aus Fasern verwendet, die mit einem Kunststoff umgossen werden. Der Verbund aus Kunststoff und den Fasern verleiht dabei dem faserverstärkten Kunststoff eine hohe Stabilität gegenüber Zugspannung, wobei die Zugspannungsstabilität von der Ausrichtung der in dem Gelege vorhandenen Fasern abhängig ist. Faserverstärkte Kunststoffe werden vor allem dort eingesetzt, wo eine hohe Belastbarkeit in Kombination mit geringem Gewicht gefordert ist, wie beispielweise im Flugzeug- oder Schiffsbau. Um faserverstärkten Kunststoff mit einem möglichst geringen Gewicht auszustatten, ist es notwendig, die Menge des auf die Faser aufgetragenen Kunststoffes so gering wie möglich zu halten, wobei der Kunststoff die Fasern vollständig umschließen soll. Bei der Verwendung von gewebten Fasern trägt die Faserschicht im Vergleich zur Stärke der Fasern relativ stark auf und hat dadurch einen erhöhten Kunststoffanspruch, der zu einem faserverstärkten Kunststoffbauteil mit hoher Schichtdicke führt und daher ein hohes Gewicht aufweist. In der Praxis ist man daher dazu übergegangen, Gelege aus Fasermaterialien zu verwenden, in welchen die einzelnen Fasern gleichmäßig angeordnet sind und sich gegenseitig nicht überkreuzen, um damit eine Erhöhung der Schichtdicke des Fasermaterials und damit den Kunststoffanspruch des Fasermaterials möglichst gering zu halten. Da bekannt ist, dass der Kunststoff nur in der Faserrichtung eine hohe Zugfestigkeit aufweist, werden multiaxiale Gelege verwendet, in welchem die Fasern in mehreren Ebenen gelegt sind, wobei in jeder Ebene die Fasern eine Vorzugsrichtung aufweisen und sich gegenseitig nach Möglichkeit nicht überkreuzen. Das einfachste so hergestellte multiaxiale Gelege ist ein Gelege, in dem zwei Bahnen einer Faseranordnung überkreuzt übereinander gelegt werden. Derartige Gelege werden dadurch hergestellt, in dem entweder Teile einer Gelegebahn unter einem Winkel zur Bahn einzeln aneinander gelegt werden, wobei zunächst eine untere und darauf folgend eine obere Schicht aus einzelnen Teilen zusammengelegt wird. Hierbei werden einzelne, aus Parallelogrammen bestehende Einzelteile zu langen Bahnen zusammengelegt. Dieses Verfahren ist jedoch nicht geeignet, größere Mengen, so wie sie in industriellen Fertigungsprozessen benötigt werden, wirtschaftlich herzustellen.

In einem anderen Verfahren ist man daher dazu übergegangen, eine oder zwei Bahnen unter einem Winkel um eine Platte zu wickeln und den so entstandenen Wickel von einer Platte abzuziehen. Dieser Prozess kann kontinuierlich durchgeführt werden, wobei der Wickel von der Platte abgezogen und im Anschluss daran zu einem Gelege verdichtet wird. Ein derartiges Verfahren hat sich in der Praxis als schwer beherrschbar herausgestellt, vor allem, wenn wie im Fall von Kohlefasern, die Fasern ein nahezu fließendes Verhalten aufweisen. Dies bedeutet, dass die Fasern aufgrund ihres geringen Gewichtes und ihrer geringen Reibung auf Oberflächen leicht zusammenfallen und somit der Ausbildung einer gleichmäßig geformten Gelegebahn entgegenwirken. Je fluider das Verhalten eines Geleges, desto schwieriger ist dabei die Herstellung eines gleichmäßig geformten multiaxialen Geleges. Beim Wickeln um die Platte ist es erforderlich, dass das Gelege, das zu unterst auf der Platte liegt, beim kontinuierlichen Abziehen von der Platte nicht dazu neigt, dass die einzelnen Fasern von der Platte abrollen und somit einen Drall aufweisen, der nach dem Abziehen des Geleges dazu führt, dass sich die Fasern verkreuseln oder überkreuzen. Die Überkreuzung macht das Gelege qualitativ schlechter bis unbrauchbar im Vergleich mit einem gleichmäßig geformten multiaxialen Gelege, in welchem keine Überkreuzungen vorkommen. Das Abrollen der Fasern entsteht vor allem dann, wenn das Gelege vergleichsweise stark gespannt auf der Wickelplatte aufgewickelt wird. Wird das Gelege hingegen locker um die Platte gelegt, so haben die einzelnen Fasern die Möglichkeit, beim Abgleiten von der Platte einander zu überkreuzen oder Schleifen auszubilden. Auch dieses führt zu einem qualitativ schlechteren oder unbrauchbaren Ergebnis.

Aufgabe dieser Erfindung ist es, ein Verfahren zur Verfügung zu stellen, welches es ermöglicht, den Wickel aus Fasern von einer Platte abzuziehen, sodass ein gleichmäßig geformtes multiaxiales Gelege aus zwei Ebenen entsteht.

Die erfindungsgemäße Aufgabe wird gelöst durch die Verwendung einer Kaskadenführung, die am Ende der Platte angeordnet ist und einen seitlich ausgezogenen Keil aufweist. Weitere vorteilhafte Ausgestaltungen der Erfindung ergeben sich aus den Unteransprüchen.

Die erfindungsgemäße Kaskadenführung weist als hauptsächlichen Bestandteil einen Keil am Ende der Platte auf, der den schlauchförmigen Wickel am Ende der Platte, um die jeweils ein monoaxiales Gelege gewickelt wird, in eine flache, gefaltete Bahn aus zwei Ebenen überführt. Der Keil weist dabei eine besondere Geometrie auf, die dazu führt, dass der Wickel gleichmäßig und ohne Ausbildung von Verwerfungen an den Rändern der Gelegebahn in das multiaxiale Gelege überführt wird. Die Grundfläche des Keils hat dabei eine identische Geometrie zur Querschnittsfläche der Platte und ist direkt an der Platte angeordnet. Je nach Vorliegen einer Anordnung zur Verminderung der Reibung auf der Platte ist jedoch ein Abstand vorgesehen, um gegebenenfalls sich bewegende Teile unter dem Keil vorbei zu führen. Die beiden voneinander abgewandten Hauptseiten der Platte, nämlich die Ober- und die Unterseite der Platte, werden durch den Keil trapezförmig aufgeweitet. Hingegen werden die Seiten der Platte mit einer endlichen Stärke durch den Keil dreieckförmig zusammengeführt, wobei die Basis des Dreiecks die gleiche Breite hat wie die Stärke der Platte und die Dreiecke führen das Gelege seitlich über die Breite der Platte hinaus. Das Trapez, welches an der Ober- und der Unterseite der Platte angebracht ist, weist eine Basis auf, die der Breite des Geleges entspricht, wobei ein geringes Maß der Breite des Geleges unterschritten wird, um das Gelege nicht unter mechanischer Spannung auf dem Keil zu führen.

In einer besonderen Ausführungsform der erfindungsgemäßen Kaskadenführung weist der Keil eine Fahne am Ende auf, nämlich dort wo die beiden Trapeze mit ihren Basen zusammenlaufen. Die Fahne hat den Vorteil, dass der nahezu zu einer ebenen Bahn zusammengelegte Wickel gleichmäßig von dem Keil abgezogen wird.

In einer weiteren vorteilhaften Ausgestaltung der Erfindung weist der Keil an den seitlichen Spitzen einen kleinen Wulst auf, der nahtlos in einen Wulst an den Rändern der Fahne übergeht, um den Reibungswiderstand der Fasern an den seitlichen Kanten der Fahne zu verringern.

Die Breite der Basen der beiden Trapeze des Keils ist dabei so gewählt, dass sie exakt um die Stärke der Wickelplatte breiter ist als die Breite der Wickelplatte. Auch hierbei ist ein geringes Untermaß vorgesehen, um den Wickel nicht unter Spannung von dem Keil abgleiten zu lassen.

In konkreter Ausgestaltung der Erfindung weist der Keil in der Kaskadenführung eine zur Querschnittsfläche der Platte identische Grundfläche auf und weist zu in der Ebene der Platte seitlich über die Kanten der Platte herausragende, tetraederartige Ausläufer aus, wodurch die beiden Ebenen der Platte durch aufeinander zulaufende Trapeze des Keils verlängert sind und wobei die Breite der Basis der beiden Trapeze gegenüber der Breite der Platte um die Stärke der Platte erhöht ist. Die Länge des Keils ist an das Fließverhalten des Wickels anzupassen. Je fließfähiger der Wickel ist, desto länger muss der Keil gewählt werden, um bei der Umformung des Wickels zu einem flachen Gelege auftretende geringfügige Verschiebungen der einzelnen Fasern an den Rändern der Wickelplatte zu verhindern und so mit möglichst geringfügigen Folgen für die Gleichmäßigkeit der so hergestellten multiaxialen Gelegebahnen Sorge zu tragen.

In einer weiteren Ausgestaltung der Erfindung weist die Kaskadenführung neben dem Keil Walzen auf, um den Wickel auf dem Keil zu führen. Die Ausgestaltung des erfindungsgemäßen Verfahrens zeichnet sich also durch die Verwendung von einzelnen Walzen in der Kaskadenführung aus, die in der Geschwindigkeit des Geleges angetrieben sind, so, dass die Walzen das Gelege weder bremsen noch antreiben und das Gelege auf den Keil andrücken. Die Walzen werden in vorteilhafter Weise mit Hilfe von Sensoren gesteuert, sodass die Walzen das Gelege nicht bremsen und somit beim Abziehen des Wickels von der Platte stauchen noch den Wickel durch Vortrieb auseinander zerren. Da die einzelnen Gelege nicht wie ein Textil in mehreren Richtungen stabil gegenüber einer Verwerfung der einzelnen Bahnen sind, ist es wichtig, dass gerade die Andruckwalzen im Idealfall kraftlos in Bezug auf Vortrieb oder Abbremsung das Gelege auf den Keil andrücken, um zu vermeiden, dass sich beim Abziehen des Wickels von der Platte Verwerfungen beim Umformen des Wickels zu einem Gelege ausbilden.

In vorteilhafter Ausgestaltung der Erfindung werden mindestens zwei Walzenanordnungen verwendet, die jeweils auf einer gemeinsamen Achse angeordnete Walzen aufweisen, wobei unterschiedliche Walzenanordnungen unterschiedliche, an die Geschwindigkeit des abgezogenen Wickels angepasste Geschwindigkeiten aufweisen. Bei der Umformung des Wickels zu einem gleichmäßigen Gelege liegen innerhalb der Bahn geringfügig unterschiedliche Bewegungsrichtungen vor, die in Bezug zur Vortriebsrichtung des Geleges seitlich aus der Bahn herausweisende Richtungskomponenten aufweisen. Diese Richtungskomponenten sind an unterschiedlichen Stellen gegebenenfalls unterschiedlich stark ausgebildet. Daher hat es sich als vorteilhaft erwiesen, wenn nicht eine durchgehende Walze in der Kaskadenführung verwendet wird, sondern es hat sich als vorteilhaft erwiesen, wenn einzelne jeweils an die lokale Geschwindigkeit der Bahn angepasste Walzen, die auf einer Achsenanordnung angeordnet sind, verwendet werden. Hierdurch wird vermieden, dass durch eine Anpassung der Walzengeschwindigkeit an eine mittlere Vortriebsgeschwindigkeit des Wickels auftretende Ungleichmäßigkeiten entstehen, welche zu Verwerfungen in der multiaxialen Gelegebahn führen könnten. In vorteilhafter Weise werden mindestens zwei Walzenanordnungen verwendet, die hintereinander angeordnet sind und je nach Länge des Keils hinzu addiert werden, sodass der Wickel über die gesamte Fläche des Keils gleichmäßig an den Keil angedrückt wird.

In einer weiteren vorteilhaften Ausgestaltung der Erfindung werden in der Kaskadenführung mindestens zwei Walzenanordnungen verwendet, die jeweils auf einer gemeinsamen Achse angeordnete Walzen aufweisen, wobei unterschiedliche Walzenanordnungen unterschiedliche an die Fließrichtung des abgezogenen Wickels angepaßte Achsenausrichtungen aufweisen. Die Walzen, die den Wickel auf den Keil andrücken, sind nicht nur unterschiedlichen Geschwindigkeiten des Wickels bei der Umformung des Wickels zu einer multiaxialen Gelegebahn ausgesetzt, sondern auch noch durch unterschiedliche Fließrichtungen. In der Mitte der Platte ist die Fließrichtung gleichzusetzen mit der Bahnrichtung. An den Seiten des Keils, dort wo die senkrechte Seitenfläche der Wickelplatte zu einem Dreieck ausläuft und um die Kante des seitlich ausgezogenen Keils herum geführt wird, haben Bestandteile des Wickels eine geringfügig andere Fließrichtung. Durch diese Ausgestaltung der Erfindung wird erreicht, dass die Walzen entsprechend der Fließrichtung, die durch die Verformung gegeben ist, angepasst sind. Hierdurch wird vermieden, dass sich Verwerfungen in der multiaxialen Gelegebahn bei der Umformung des Wickels zur Gelegebahn ausbilden können.

Es hat sich als vorteilhaft erwiesen, wenn das Gelege am Ende des Keils über eine Fahne gezogen wird, die am Ende des Keils angeordnet ist und eine etwa rechteckige Form mit sehr geringer Wandstärke aufweist. Hierdurch wird dem Gelege die Möglichkeit gegeben, sich auf der Fahne auszurichten, ohne dabei ohne ein stützendes Gerüst Verwerfungen auszubilden.

Um die Reibung an den Kanten der Fahne zu verringern, ist vorgesehen, die Kanten mit einem geringfügig ausgeprägten Wulst auszustatten, wobei der Wulst so ausgeprägt ist, dass die Fasern sich um diesen Wulst legen können, ohne dabei zu brechen. Dabei ist die Ausprägung des Wulstes stark abhängig von der Biegefähigkeit der in dem Gelege verwendeten Fasern. Um den Fluss des Wickels bei der Umformung zu unterstützen, ist vorgesehen, dass der Keil an den Kanten geringfügig abgerundet ist, und dass für einen fließenden Übergang vom Keil auf die Fahne die Spitzen des Keils in einem kleinen Wulst enden, der nahtlos in den Wulst der Fahne übergeht.

Es hat sich dabei als vorteilhaft erwiesen, wenn der Wulst zum Ende der Fahne geringfügig verjüngt ist. Durch den verjüngten Wulst wird die mechanische Wickelspannung um die Fahne beim Abziehen allmählich verringert. Alternativ oder kumulativ dazu kann auch die Geometrie der Fahne geringfügig trapezförmig sein, sodass sich die Fahne zum Ende, nämlich dort wo der umgeformte Wickel von der Fahne abgenommen wird, gegenüber der Breite des Keils verjüngt ist. Auch durch diese Verjüngung wird erreicht, dass die mechanische Spannung beim Abziehen des Wickels abgebaut wird.

In besonderer Ausgestaltung der Erfindung sind die Einzelteile der Kaskadenführung mit einer die Reibung vermindernden Oberfläche versehen. Als besonders vorteilhaft haben sich hierbei Oberflächen aus einem polyfluoriertem Polymer erwiesen und ganz besonders vorteilhaft hat sich eine Oberfläche aus diamantartigem Kohlenstoff erwiesen, der eine ganz besonders geringe Reibung gegenüber Kohlefasern aufweist. Hierdurch wird vermieden, dass Reibungskräfte entstehen, die ein ungleichmäßiges Umformen bewirken und somit Ungleichmäßigkeiten in dem umgeformten Wickel erzeugen.

Die Erfindung wird anhand der folgenden Figur näher erläutert.

Es zeigen
- Fig. 10: das Ende einer Wickelplatte aus dem Stand der Technik,
- Fig. 11: das Ende der Wickelplatte gemäß Figur 10 mit überlagert eingezeichneten Keil gemäß der Erfindung,
- Fig. 12: den Keil der erfindungsgemäßen Kaskadenführung,
- Fig. 13: den Keil der erfindungsgemäßen Kaskadenführung mit Einbuchtung,
- Fig. 14: das Ende einer Wickelplatte mit daran angesetztem Keil und über diese Anordnung transparent eingezeichneten Wickel der umgeformt wird,
- Fig. 15: die Anordnung aus Figur 14 mit eingezeichneten Walzen und
- Fig. 16: die Anordnung aus Figur 15 mit eingezeichneten Wickel.

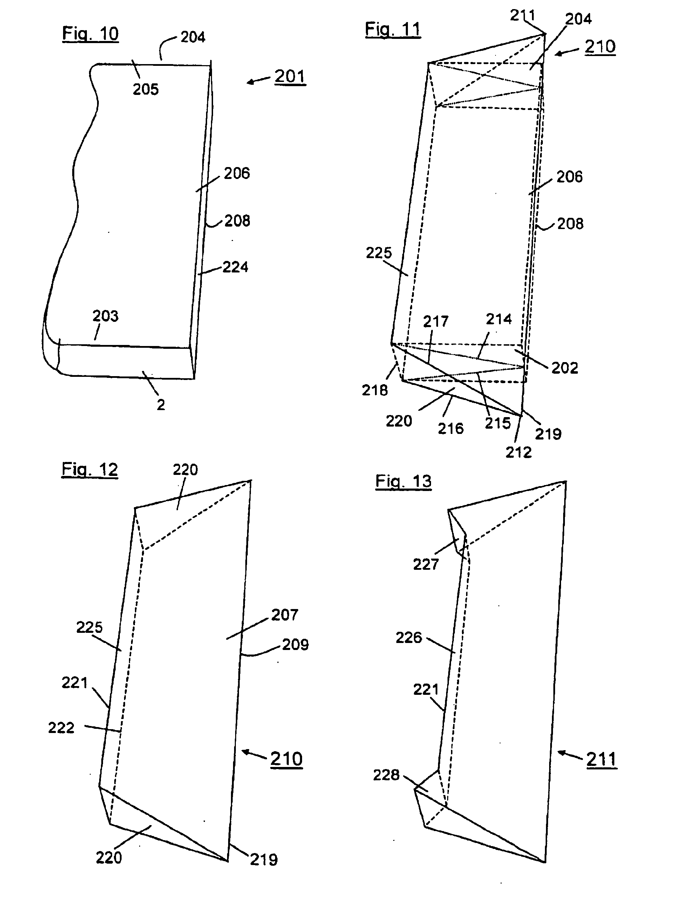

In Figur 10 ist das Ende einer Platte 201 dargestellt wird, um welches die monoaxialen Gelege gewickelt werden, um ein multiaxiales Gelege zu formen. Die Platte 201 weist dabei Seitenflächen 202 und 204 auf, die zusammen mit der Oberseite 206 und der Unterseite 208 der Platte 201 einen quaderförmigen Körper bilden, um den die monoaxialen Gelege gewickelt werden. Im Idealfall sollte die Platte 201 eine infinitesimal geringe Plattenstärke aufweisen, dies ist aber im Realfall nicht möglich. Daher hat die Platte 201 eine Querschnittsfläche 224, die sowohl horizontale wie vertikale Ausdehnungen aufweist. Die Platte 201 weist seitliche Kanten 203 und 205 auf, an denen ein um die Platte 201 gewickelter Wickel Wickelkanten ausbildet, die dazu führen, dass der Wickel schlauchartig mit einer Querschnittfläche, die in etwa der Querschnittfläche 224 entspricht, ausgebildet ist.

In Figur 11 ist die Platte 201 als gestrichelter Quader eingezeichnet, der durch die Seitenfläche 202 und 204 und die Oberseite 206 und die Unterseite 208 ausgebildet ist. In diesen Körper ist ein Keil 210 eingezeichnet, der mit dem gestrichelten Körper, der der Platte 201 entspricht, die Schnittlinien 214 und 215 bildet. Gegenüber der Breite der Platte 201 weist der Keil 210 seitliche, tretraederförmige Spitzen 211 und 212 auf, die je aus einer Dreiecksfläche 220 bestehen, die durch die Schenkel 216 und 217 sowie die Basis 218 gebildet sind. Der Keil 210 in Figur 11 ist zur besseren Verdeutlichung der geometrischen Verhältnisse zwischen dem Keil 210 und dem Endstück der Platte 201 ineinander dargestellt.

In Figur 12 ist der Keil 210 einzeln dargestellt, der durch die Trapeze 207 und 209, der Grundfläche 225, die mit der Querschnittsfläche 224 der Platte 201 identisch ist, und den Dreiecksflächen 220 begrenzt ist. Die Trapeze 207 und 209 weisen eine Basis 218 auf und der Basis 219 gegenüber liegende Seiten 221 und 222. Die Seiten 221 und 222 haben dabei eine Ausdehnung wie die Breite der Platte 201.

In Figur 13 ist der Keil 213 mit einer Einbuchtung 226 dargestellt, dessen innere Fläche 223 gegenüber den Seiten 221 und 222 in Figur 12 verkürzt ist. Die Einbuchtung 226 kann dabei mechanisch bewegte Teile am Ende des Wickeltisches aufnehmen und die seitlichen Keile 227 und 228 umgreifen die mechanisch bewegten Teile am Ende des Wickeltisches.

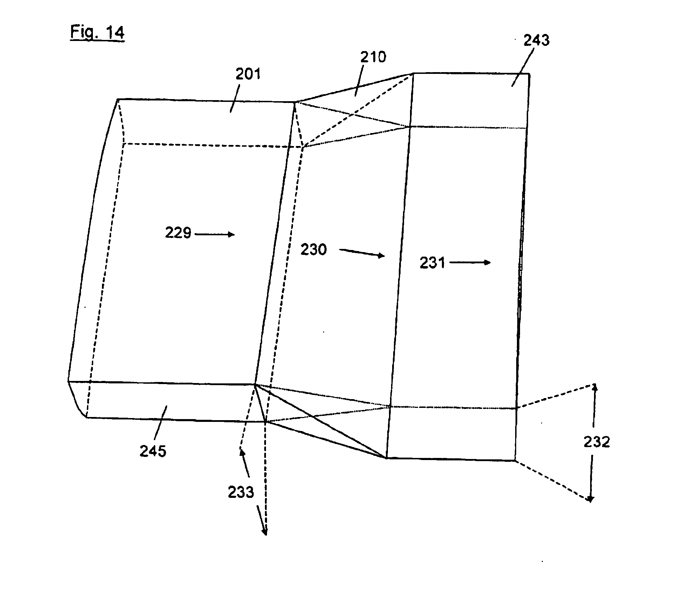

In Figur 14 ist der Keil 210 in Verbindung mit der Platte 201 als zusammenhängender Körper dargestellt, über welchen ein transparent dargestellter Wickel 245 gelegt ist. Der Wickel 245 wird in Figur 14 von links nach rechts von der Platte 201 abgezogen und durch den Keil 210 zum Gelege 243 umgeformt. Dabei ändert sich die Vorschubrichtung 229 des Wickels auf den Keil zur Fließrichtung 230 und geht in Fließrichtung 231 des Geleges 243 über. Die gesamte Breite des Geleges 243 ist dabei um die Stärke 233 der Platte 201 verbreitert. Beim Umformen des Wickels 245 in das Gelege 243 entstehen an den Seiten des Geleges 243 jeweils zwei gefaltete Ausläufer mit der Breite 232, die der halben Stärke 233 der Platte 201 entspricht.

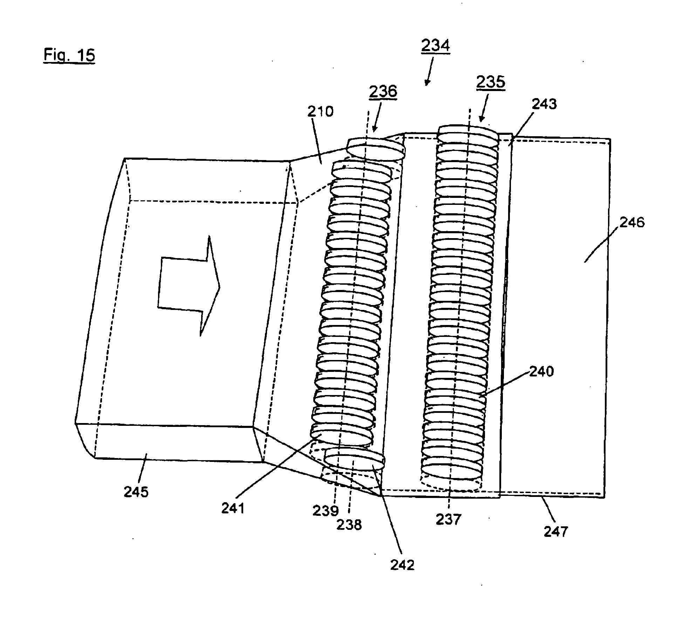

In Figur 15 ist nochmals die Anordnung aus Figur 14 dargestellt, wobei jedoch die Kaskadenführung 234, bestehend aus dem Keil 210 und den Walzenanordnungen 235 und 236, eingezeichnet ist. Neben den zusätzlich eingezeichneten Walzenanordnungen 235 und 236 ist eine Fahne 245 mit einem Wulst 246 eingezeichnet, über den das Gelege 243 geführt wird. Die Walzenanordnungen 235 und 236 weisen verschiedene Achsen 237, 238 und 239 auf, wobei auf den Achsen 237, 238 und 239 einzelne Walzenkörper 240, 241 und 242 angeordnet sind. In Figur 15 weisen die Walzenkörper 240 auf der Achse 237 der Walzenanordnung 235 alle eine gemeinsame Achsenausrichtung auf. Die einzelnen Walzenkörper 240 werden dabei optional einzeln angetrieben, sodass diese das Gelege 243 weder bremsen noch antreiben, sondern kraftlos in Bezug auf eine Vortriebsrichtung das Gelege 243 auf die Fahne 246 pressen. In der Walzenanordnung 236 sind zwei verschiedene Achsen 238 und 239 eingezeichnet, wobei der Walzenkörper 242 auf Achse 238 sowohl eine geringfügig andere Richtung wie auch eine geringfügig andere Geschwindigkeit aufweisen kann als die einzelnen Walzenkörper 241 auf der Achse 239.

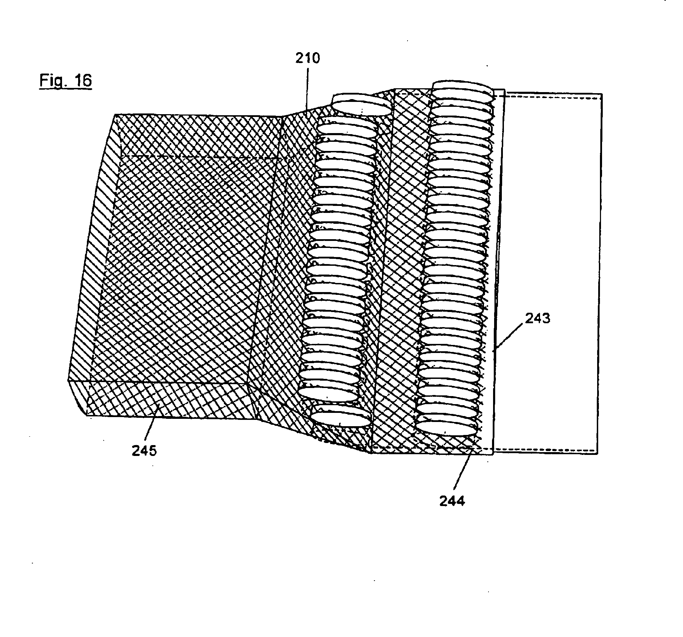

In Figur 16 ist eine zur Figur 15 vergleichbare Anordnung dargestellt, wobei zusätzlich die einzelnen Fasern 244 dargestellt sind, die den Wickel 245 und das Gelege 243 ausbilden. Die Funktionsweise der Kaskadenführung in Figur 16 ist dabei identisch zur Funktionsweise der Kaskadenführung in Figur 15, wobei hier das Gelege deutlich dargestellt ist und erkennen lässt, wie der Wickel 245 durch den Keil 210 zu dem Gelege 243 umgeformt wird.

Die vorbeschriebenen Ausführungsbeispiele dienen der Erläuterung und sind nicht beschränkend.

### Bezugszeichenliste

- 201: Platte
- 202: Seitenfläche
- 203: Kante
- 204: Seitenfläche
- 205: Kante
- 206: Oberseite
- 207: Trapez
- 208: Unterseite
- 209: Trapez
- 210: Keil
- 211: Spitze
- 212: Spitze
- 213: Keil
- 214: Schnittlinie
- 215: Schnittlinie
- 216: Schenkel
- 217: Schenkel
- 218: Basis (Dreieck)
- 219: Basis (Trapez)
- 220: Dreiecksfläche
- 221: Seite
- 222: Seite
- 223: Fläche
- 224: Querschnittsfläche
- 225: Grundfläche
- 226: Einbuchtung
- 227: Keil
- 228: Keil
- 229: Vorschubrichtung
- 230: Fließrichtung
- 231: Fließrichtung
- 232: Breite
- 233: Stärke
- 234: Kaskadenführung
- 235: Walzenanordnung
- 236: Walzenanordnung
- 237: Achse
- 238: Achse
- 239: Achse
- 240: Walzenkörper
- 241: Walzenkörper
- 242: Walzenkörper
- 243: Gelege
- 244: Faser
- 245: Wickel
- 246: Fahne
- 247: Wulst

## Patentansprüche

1. Verfahren zur Herstellung eines multidirektionalen Geleges (243) aus Fasern (244), insbesondere aus Kohlefasern, in welchem eine unidirektionale Gelegebahn unter einem Winkel um eine Platte (201) zu einem Wickel (245) gewickelt wird, wobei die Platte (201) mit einer Vorrichtung zur Kompensation von Reibung versehen ist, und der Wickel (243) von der Platte (201) abgezogen wird,
**gekennzeichnet durch**
die Verwendung einer Kaskadenführung (234), die am Ende der Platte (201) angeordnet ist und einen seitlich ausgezogenen Keil (210) aufweist,

2. Verfahren nach Anspruch 1,
**gekennzeichnet durch**
die Verwendung eines Keils (201) in der Kaskadenführung (234), der eine zur Querschnittsfläche (224) der Platte (201) identische Grundfläche (225) aufweist und zu in der Ebene (206, 208) der Platte (201) seitlich über die Kanten (203, 205) der Platte (201) herausragenden, tetraederartigen Ausläufern (211, 212) ausgezogen ist, wodurch die beiden Ebenen (206, 208) der Platte (201) **durch** aufeinander zulaufende Trapeze (207, 209) des Keils (210) verlängert sind und wobei die Breite der Basis (219) der beiden Trapeze (207, 209) gegenüber der Breite der Platte (201) um die Stärke (218) der Platte (201) erhöht ist.

3. Verfahren nach einem der Ansprüche 1 und 2,
**gekennzeichnet durch**
die Verwendung von einzelnen Walzen (240, 241, 242) in der Kaskadenführung (234), die in der Geschwindigkeit des Geleges (243) angetrieben sind, so, dass die Walzen (240, 241, 242) das Gelege (243) weder bremsen noch antreiben und das Gelege (243) auf den Keil (210) andrücken.

4. Verfahren nach einem der Ansprüche 1 bis 3,
**gekennzeichnet durch**
die Verwendung mindestens zweier Walzenanordnungen (235, 236), die jeweils auf einer gemeinsamen Achse (237, 238, 239) angeordnete Walzen (240, 241, 242) aufweisen, wobei unterschiedliche Walzenanordnungen (235, 236) unterschiedliche, an die Geschwindigkeit des abgezogenen Wickels (245) angepasste Geschwindigkeiten aufweisen.

5. Verfahren nach einem der Ansprüche 1 bis 4,
**gekennzeichnet durch**
die Verwendung mindestens zweier Walzenanordnungen (235, 236), die jeweils auf einer gemeinsamen Achse (237, 238, 239) angeordnete Walzen (240, 241, 242) aufweisen, wobei unterschiedliche Walzenanordnungen (235, 236) unterschiedliche, an die Fließrichtung (230) des abgezogenen Wickels (245) angepasste Achsenausrichtungen aufweisen.

6. Verfahren nach einem der Ansprüche 1 bis 5,
**gekennzeichnet durch**
die Verwendung einer Fahne (246), die am schmalen Ende des Keils (210) angeordnet ist über welches der abgezogene Wickel (245) geführt und zu einem Gelege (243) umgeformt wird.

7. Verfahren nach einem der Ansprüche 1 bis 6,
**gekennzeichnet durch**
die Verwendung eines Keils (210), dessen Kanten abgerundet sind.

8. Verfahren nach einem der Ansprüche 1 bis 7,
**gekennzeichnet durch**
die Verwendung eines Keils (210), dessen seitliche Spitzen (211, 212) in einem Wulst (247) enden.

9. Verfahren nach einem der Ansprüche 6 bis 8,
**gekennzeichnet durch**
die Verwendung einer Fahne (246), die an den seitlichen Kanten je einen Wulst (247) aufweisen.

10. Verfahren nach einem der Ansprüche 6 bis 9,
**gekennzeichnet durch**
die Verwendung einer Fahne (246), deren Wulst (247) zum Ende verjüngt ist.

11. Verfahren nach einem der Ansprüche 6 bis 10,
**gekennzeichnet durch**
die Verwendung einer Fahne (246), die zum Ende eine verjüngte Breite aufweist.

12. Verfahren nach einem der Ansprüche 1 bis 11,
**gekennzeichnet durch**
die Verwendung einer die Reibung vermindernden Oberfläche auf den Wickel (245) berührenden Einzelteilen der Kaskadenführung (234), insbesondere einer Oberfläche aus einem polyfluoriertem Polymer oder aus diamantartigem Kohlenstoff.

13. Verfahren nach einem der Ansprüche 1 bis 12,
**gekennzeichnet durch**
die Verwendung einer Einbuchtung (226) in der Grundfläche (224) des Keils (210) zur Aufnahme von mechanisch bewegten Teilen am Ende des Wickeltisches.

14. Kaskadenführung zur Durchführung des Verfahrens nach einem der Ansprüche 1 bis 13.

## Claims

1. Method for producing a multidirectional fabric (243) of fibres (244), in particular of carbon fibres, in which a unidirectional fabric web is wound at an angle around a plate (201) into a lap (245), the plate (201) being provided with a device for compensating friction and the lap (243) being drawn off from the plate (201),
**characterized by**
the use of a cascade guide (234) disposed at the end of the plate (201) and comprising a laterally extended wedge (210).

2. Method according to claim 1,
**characterized by**
the use of a wedge (201) in the cascade guide (234) comprising a base (225) that is identical to the cross-sectional area (224) of the plate (201) and extended into tetrahedral branches (211, 212) that project laterally beyond the edges (203, 205) of the plate (201) in the plane (206, 208) of the plate (201), whereby the two planes (206, 208) of the plate (201) are elongated by trapezoids (207, 209) of the wedge (210) running towards each other, and wherein the width of the base (219) of the two trapezoids (207, 209) is increased with respect to the width of the plate (201) by the thickness (218) of the plate (201).

3. Method according to one of claims 1 and 2,
**characterized by**
the use of individual rollers (240, 241, 242) in the cascade guide (234) which are driven at the speed of the fabric (243), so that the rollers (240, 241, 242) neither brake nor drive the fabric (243) and press the fabric (243) against the wedge (210).

4. Method according to one of claims 1 to 3,
**characterized by**
the use of at least two roller arrangements (235, 236) which comprise rollers (240, 241, 242) each disposed on a common axis (237, 238, 239), wherein different roller arrangements (235, 236) have different speeds adapted to the speed of the drawn-off lap (245).

5. Method according to one of claims 1 to 4,
**characterized by**
the use of at least two roller arrangements (235, 236) which comprise rollers (240, 241, 242) each disposed on a common axis (237, 238, 239), wherein different roller arrangements (235, 236) have different orientations of the axis adapted to the direction of flow of the drawn-off lap (245).

6. Method according to one of claims 1 to 5,
**characterized by**
the use of a stretch (246) which is disposed at the narrow end of the wedge (210) and over which the drawn-off lap (245) is guided and reshaped into a fabric (243).

7. Method according to one of claims 1 to 6,
**characterized by**
the use of a wedge (210) whose edges are rounded.

8. Method according to one of claims 1 to 7,
**characterized by**
the use of a wedge (210) whose lateral tips (211, 212) end in a bead (247).

9. Method according to one of claims 6 to 8,
**characterized by**
the use of a stretch (246) having one bead (247) each at its lateral edges.

10. Method according to one of claims 6 to 9,
**characterized by**
the use of a stretch (246) whose bead (247) tapers towards its end.

11. Method according to one of claims 6 to 10,
**characterized by**
the use of a stretch (246) having a tapered width towards its end.

12. Method according to one of claims 1 to 11,
**characterized by**
the use of a friction-reducing surface on individual parts of the cascade guide (234) that contact the lap (245), in particular a surface of a polyfluorinated polymer or of adamantine carbon.

13. Method according to one of claims 1 to 12,
**characterized by**
the use of an indentation (226) in the base (224) of the wedge (210) for receiving mechanically moved parts at the end of the lap table.

14. Cascade guide for carrying out the method according to one of claims 1 to 13.

## Revendications

1. Procédé de fabrication d'une structure (243) multidirectionnelle en fibres (244), en particulier en fibres de carbone, dans lequel une bande structurelle unidirectionnelle est enroulée sous un angle autour d'une plaque (201) pour former un enroulement (245), la plaque (201) étant pourvue d'un dispositif de compensation de frottement, et l'enroulement (245) est retiré de la plaque (201),
**caractérisé par**
l'utilisation d'un guidage en cascade (234), qui est disposé à l'extrémité de la plaque (201) et présente un coin (210) déployé latéralement.

2. Procédé selon la revendication 1,
**caractérisé par**
l'utilisation d'un coin (201) dans le guidage en cascade (234), qui présente une surface de base (225) identique à la surface sectionnelle (224) de la plaque (201) et est déployé pour former des extensions (211, 212) de forme tétraédrique latéralement en saillie au-delà des arêtes (203, 205) de la plaque (201) dans le plan (206, 208) de la plaque (201), les deux plans (206, 208) de la plaque (201) étant ainsi prolongés par des trapèzes (207, 209) du coin (210) se rejoignant et la largeur de la base (219) des deux trapèzes (207, 209) étant augmentée par rapport à la largeur de la plaque (201) de l'épaisseur (218) de la plaque (201).

3. Procédé selon l'une des revendications 1 et 2,
**caractérisé par**
l'utilisation de cylindres individuels (240, 241, 242) dans le guidage en cascade (234), qui sont entraînés à la vitesse de la structure (243), de telle sorte que les cylindres (240, 241, 242) ni ne freinent ni n'entraînent la structure (243) et pressent la structure (243) contre le coin (210).

4. Procédé selon l'une des revendications 1 à 3,
**caractérisé par**
l'utilisation d'au moins deux agencements de cylindre (235, 236) qui présentent chacun des cylindres (240, 241, 242) disposés sur un axe commun (237, 238, 239), des agencements de cylindre (235, 236) différents présentant des vitesses adaptées à la vitesse de l'enroulement (245) retiré.

5. Procédé selon l'une des revendications 1 à 4,
**caractérisé par**
l'utilisation d'au moins deux agencements de cylindre (235, 236), qui présentent chacun des cylindres (240, 241, 242) disposés sur un axe commun (237, 238, 239), des agencements de cylindre (235, 236) différents présentant des directions d'axe différentes adaptées au sens de circulation (230) de l'enroulement (245) retiré.

6. Procédé selon l'une des revendications 1 à 5,
**caractérisé par**
l'utilisation d'une languette (246) qui est disposée à l'extrémité étroite du coin (210), par laquelle l'enroulement (245) retiré est guidé et transformé en structure (243).

7. Procédé selon l'une des revendications 1 à 6,
**caractérisé par**
l'utilisation d'un coin (210) dont les arêtes sont arrondies.

8. Procédé selon l'une des revendications 1 à 7,
**caractérisé par**
l'utilisation d'un coin (210), dont les pointes latérales (211, 212) se terminent en un renflement (247).

9. Procédé selon l'une des revendications 6 à 8,
**caractérisé par**
l'utilisation d'une languette (246) qui présente un renflement (247) à chacune des arêtes latérales.

10. Procédé selon l'une des revendications 6 à 9,
**caractérisé par**
l'utilisation d'une languette (246) dont le renflement (247) est rétréci à l'extrémité.

11. Procédé selon l'une des revendications 6 à 10,
**caractérisé par**
l'utilisation d'une languette (246) qui présente à l'extrémité une largeur rétrécie.

12. Procédé selon l'une des revendications 1 à 11,
**caractérisé par**
l'utilisation d'une surface diminuant le frottement sur des composants en contact avec l'enroulement (245) du guidage en cascade (234), en particulier d'une surface constituée d'un polymère polyfluoré ou de carbone de type diamant.

13. Procédé selon l'une des revendications 1 à 12,
**caractérisé par**
l'utilisation d'une échancrure (226) dans la surface de base (224) du coin (210) pour la réception d'éléments déplacés mécaniquement à l'extrémité de la table d'enroulement.

14. Guidage en cascade destiné à la réalisation du procédé selon l'une des revendications 1 à 13.
